# EUROPEAN PATENT SPECIFICATION

(11) **EP 1 359 203 B1**
(45) Date of publication and mention of the grant of the patent: **20.07.2005**
(21) Application number: 03010754.4
(22) Date of filing: 07.09.2000
(51) Int. Cl.: C09K 5/00, C23F 11/00, C23F 11/06

(54) **Corrosion inhibiting solutions for absorption systems**
Korrosionsinhibierende Lösungen für Absorptionssysteme
Solutions anticorrosion destinées a des systèmes a absorption

(30) Priority: 07.09.1999 US 153110 P
(43) Date of publication of application: 05.11.2003
(62) Divisional of application: 00959975.4
(73) Proprietor: FMC CORPORATION, Philadelphia, PA 19103 (US)
(72) Inventor: Verma, Shyam Kumar, Augusta, Georgia 30909 (US); Sandor, George Robert, Gastonia, North Carolina 28056 (US)
(74) Representative: Maisch, Thomas, Dr. rer. nat.

(56) References cited:
- WO-A-97/49842
- WO-A-98/03608
- US-A- 4 743 393
- US-A- 4 963 290
- US-A- 5 547 600
- US-A- 6 004 475
- PIKEL'NYI A Y ET AL: "THE KINETICS AND MECHANISM OF CORROSION IN THE PRESENCE OF HETEROPOLYCOMPOUNDS" PROTECTION OF METALS,US,PLENUM PUBLISHING CO, NEW YORK, vol. 30, no. 4, 1 July 1994 (1994-07-01), pages 385-386, XP000466629 ISSN: 0033-1732
- LOMAKINA S V ET AL: "HETEROPOLY ANIONS AS CORROSION INHIBITORS FOR ALUMINIUM IN HIGH TEMPERATURE WATER" WERKSTOFFE UND KORROSION,DE,VERLAG CHEMIE GMBM. WEINHEIM, vol. 46, no. 7, 1 July 1995 (1995-07-01), page R111 XP000517821 ISSN: 0947-5117
- DATABASE WPI Section Ch, Week 199926 Derwent Publications Ltd., London, GB; Class E31, AN 1999-308411 XP002154821 & JP 11 106750 A (FMC CORP), 20 April 1999 (1999-04-20)

## Description

### FIELD OF THE INVENTION

This invention relates generally to corrosion inhibiting solutions, and in particular to corrosion inhibiting absorption solutions which include corrosion inhibiting agents.

### BACKGROUND OF THE INVENTION

Aqueous solutions of ammonia are useful as absorbent fluids in a variety of systems, such as absorption refrigeration machines, air conditioning systems, absorption heat pumps, reactifiers. Many of these systems also include heat exchangers. These systems typically operate under anaerobic conditions at temperatures of up to 450°F. Typically such solutions include ammonia in an amount ranging from about 1 to about 50 weight percent, based on the total weight of the solution.

Aqueous solutions of alkali metal and/or alkaline earth metal hydroxides, such as solutions of calcium hydroxide, potassium hydroxide, cesium hydroxide and mixtures thereof, are also used in absorbent fluids, for example in absorption cooling machines, chillers, and heat pumps. Typically such solutions include alkali metal and/or alkaline earth metal hydroxide in an amount ranging from about 20 to about 80 weight percent, based on the total weight of the solution.

Although these and other types of absorption solutions can be advantageous, aqueous ammonia, alkali metal hydroxides and/or alkaline earth metal hydroxides can be corrosive toward the materials used to construct the machines. Such materials can include mild and stainless steel for containment components and copper or copper-nickel alloys for tube bundles (typically for machines in which alkali metal hydroxide and/or alkaline earth metal hydroxide solutions are used), among others.

In addition to the surface damage caused by corrosion, the corrosion reaction evolves hydrogen gas as a byproduct. Incondensibles in the form of atoms or ions can easily enter and diffuse into metals, resulting in the degradation of their mechanical properties under certain conditions.

The severity of corrosion can vary depending upon factors such as temperatures of the system, concentration of ammonia, alkali metal hydroxide and/or alkaline earth metal hydroxide in the absorption solution, metals used in the construction of the unit, the presence of air. For example, during use, the internal temperature of such machines can be high, typically up to about 450°F and higher, depending on the type of the absorption cycle, which can increase the corrosive effect of the solution. As noted above, corrosion can generate significant amounts of hydrogen during machine operation, which can adversely impact the performance of the machine.

Various additives, such as lithium chromate, lithium nitrate, and lithium molybdate, have been proposed as corrosion inhibitors in absorption solutions. However, lithium chromate can raise environmental concerns, and its use is being phased out. Further, the level of chromate and its oxidation state must be carefully maintained. Chromate acts as an oxidant. Thus typically large quantities of chromate are added initially and must be replaced periodically to maintain the desired level of corrosion inhibition. If too little chromate is used, then it does not properly passivate the whole metal surface and pitting can result.

Lithium nitrate can potentially evolve ammonia, which can cause stress corrosion cracking of copper based alloys such as heat exchanger tubes. Lithium molybdate exhibits only limited solubility in ammonium, alkali metal hydroxide and/or alkaline earth metal hydroxide solutions. In addition, lithium molybdate is metastable in aqueous ammonium, alkali metal hydroxide, and/or alkaline earth metal hydroxide solutions. Thus it can be difficult to maintain in aqueous ammonia, alkali metal hydroxide, and/or alkaline earth metal hydroxide solutions and to maintain a constant concentration of molybdate ions in solution.

U.S. Patent No. 5,342,578 reports the use of silicon compounds, in particular sodium silicate, as inhibitors for aqueous ammonium solutions. However, at a certain critical ammonium concentration, the effectiveness of such silicon compounds is diminished. Further, such silicon compounds can have limited solubility in an aqueous medium.

Pending U.S. Patent Application 08/882,771, filed June 26, 1997, titled "Corrosion Inhibiting Solutions for Refrigeration Systems," is directed to the use of heteropoly complex anions of transitional elements as corrosion inhibition additives. Refrigeration absorption formulations which included heteropoly complex anions as a component exhibited improved corrosion inhibition properties and low generation of hydrogen gas that is evolved due to the corrosion reaction of alkali halide solutions with the materials of construction of the refrigeration machine. Pending U.S. Patent Application Serial No. 08/896,110, filed July 17, 1997, titled "Corrosion Inhibiting Solutions for Refrigeration Systems," is directed to the use of halide compounds of metallic elements of group Va, and demonstrated that alkali halide formulations containing these elements offer improved corrosion protection and low hydrogen as compared to conventional corrosion inhibitors.

### SUMMARY OF THE INVENTION

The present invention provides aqueous ammonia solutions which are useful as absorption fluids for absorption machines. In one aspect of this embodiment of the invention, the absorption solution contains at least one heteropoly complex anion of transition metal elements as a corrosion inhibitor. Alternatively the absorption solution contains a mixture of at least one heteropoly complex anion of transition metal elements with at least one other transition metal compound or salt as corrosion inhibitors. In yet another aspect of this embodiment of the invention, the absorption solution contains a mixture of at least one heteropoly complex anion with at least one compound or salt of the metallic elements of the groups IIIa to VIa of the Periodic Table of Elements as corrosion inhibitors. In yet another aspect of this embodiment of the invention, the solutions include at least one salt of a metallic element of Group Va of the Periodic Table of Elements, such as a halide or oxide thereof, and preferably antimony bromide (SbBr₃), as a corrosion inhibition additive.

Another embodiment of the invention provides alkali metal and/or alkaline earth metal hydroxide solutions, such as solutions of lithium hydroxide, calcium hydroxide, potassium hydroxide, sodium hydroxide, cesium hydroxide, and the like and mixtures thereof, which are useful as absorption fluids for absorption machines. In one aspect of this embodiment of the invention, the absorption solution contains at least one heteropoly complex anion of transition metal elements as a corrosion inhibiting additive. Alternatively the absorption solution contains a mixture of at least one heteropoly complex anion of transition metal elements with at least one other transition metal compound or salt as corrosion inhibitors. In yet another aspect of this embodiment of the invention, the absorption solution contains a mixture of at least one heteropoly complex anion with at least one compound or salt of the metallic elements of the groups IIIa to VIa of the Periodic Table of Elements as corrosion inhibitors. In yet another aspect of this embodiment of the invention, the solutions include at least one salt of a metallic element of Group Va of the Periodic Table of Elements, such as a halide or oxide thereof, and preferably antimony halide, as a corrosion inhibition additive.

The compositions of the invention containing the above noted corrosion inhibitors provide improved corrosion protection for the materials of construction of the absorption machine. The formulations of this invention which contain the noted additives can also provide stable formulations, thereby providing aqueous ammonia, alkali metal hydroxide and/or alkaline earth metal hydroxide solutions having a sufficient concentration of the desired corrosion inhibiting agent. In addition, the solutions can reduce hydrogen generation and thus enhance performance of the absorption machines, due to reduced accumulation of non-condensable gas in the absorber. Still further, use of the absorption solutions in an absorption machine can result in a protective layer containing magnetite (iron oxide) formed on carbon steel. The inventors have found that protective layer which forms as a result of using the solutions of the invention can be more corrosion resistant than oxide layer formed in the presence of conventional corrosion inhibitors, such as lithium molybdate, in which magnetite film tends to be more amorphous and less developed. The solutions are useful in any of the types of absorption machines known in the art, such as absorption refrigeration machines, chillers, air conditioning systems, heat exchangers, heat pump systems.

The present invention also provides processes for inhibiting corrosion of absorption machines, such as refrigeration machines, using the absorption solutions of the invention.

### DETAILED DESCRIPTION OF THE PREFERRED EMBODIMENTS

The present invention will be described more fully hereinafter in connection with illustrative embodiments of the invention which are given so that the present disclosure will be thorough and complete and will fully convey the scope of the invention to those skilled in the art. However, it is to be understood that this invention may be embodied in many different forms and should not be construed as being limited to the specific embodiments described and illustrated herein. Although specific terms are used in the following description, these terms are merely for purposes of illustration and are not intended to define or limit the scope of the invention.

The heteropoly complex anions of transition metal elements can be generally described as coordination-type salts and free acids with a complex and high molecular weight anion. The heteropoly complex anions include as a ligand or complexing agent at least one transition metal atom which, as an ion in solution, exhibits corrosion inhibiting properties in absorption systems. The heteropoly complex anions useful in the solutions of the invention also are preferably substantially completely soluble in ammonia solution, so as to maximize the concentration of the corrosion inhibiting ions in solution. The heteropoly anions contain complexed transition metal atoms (such as Mo). Therefore, the dissolved heteropoly anions can provide a higher level of transition metal anions (Mo anions) in a solution, as compared to simple transition metal oxides, such as molybdates like lithium molybdate.

Any of the heteropoly complex anions known in the art can be used in the invention, including compounds described in the above-referenced U.S. Patent Application Serial No. 08/882,771, filed June 26, 1997.

Such complexes can be generally represented by the following formulas:

[XₐM_{b}O_{c}]⁻ⁿ,

[XₐZ_{d}M_{b}O_{c}]⁻ⁿ,

[XₐZ_{d}M_{b}O_{c}Hₑ]⁻ⁿ,

[XₐM_{b}O_{c}(OH)_{f}]⁻ⁿ,

and

[XₐZ_{d}M_{b}O_{c}(OH)_{f}]⁻ⁿ,

wherein:
X and Z are central heteroatoms from Groups I-VIII of the Periodic Table of Elements;
the value of a varies and is 1 or 2;
the value of d varies and is an integer from 0 to 4;
M_{b}O_{c}, M_{b}O_{c}Hₑ, and M_{b}O_{c}(OH)_{f} are oxoanions in which M is a transition metal element; the value of b varies, depending upon the number of transition metal atoms present in the oxoanion and can be an integer from 5 to 22, preferably 6 to 12; the value of c varies, depending upon the number of oxygen atoms present in the oxoanion attached to the transition metal and also capable of forming unique structural groups with the central atoms, and is an integer from 20 to 70, preferably from 24 to 40; the value of e varies (for example in the reduced heteropolyanion, the value of e varies depending upon the reduction of the heteropolyanion) and is an integer from 0 to 6; and the value of f varies and is an integer from 0 to 3; and
n is the charge of the anion and is the sum of the charges on X, Z, M, O, H, and OH.

Although the above formulas are general representations of the heteropoly complex anions useful in the invention, as will be appreciated by the skilled artisan, other compounds can also be included. Also as these formulas represent, in some heteropoly complex anions, H atoms in addition to the O atoms have been reported. Any of the various heteropoly complex anions known in the art can be used in the invention, including compounds described by G.A. Tsigdinos, Topics Curr. Chem., vol. 76, 5-64 (1978) and D.L. Kepert, Comprehensive Inorganic Chemistry (A.F. Trofman et al.) Oxford:Pergamon Press, vol. 4, pp. 607 (1973).

With regard to the central or heteroatom X, over 40 different elements (both metals and nonmetals) from Periodic Groups I-VIII can function as central atoms in distinct heteropoly complex anions. For example, X can be an elements selected from Groups IVB, VB, VIB, VIIB, VIII, IB, IIB, IIIA, IVA, and VA of the Periodic Table of Elements. Exemplary central atoms include, but are not limited to, ions of phosphorus, silicon, manganese, arsenic, boron, iron, tellurium, copper, zinc, aluminum, tin, zirconium, titanium, vanadium, antimony, bismuth, chromium, gallium, germanium.

M is a 2-18 hexavalent transition metal element atom, which surrounds one or more central atoms X. The transition metal atom M is selected from those elements which as ions in solution provide corrosion inhibiting effect in absorption systems. Preferably the transition metal element M in the oxoanion is derived from molybdate or tungstate. Other transition metal elements can also be present, as represented in the formula as Z, such as but not limited to, an element selected from Groups IVB, VB, VIB, VIIB, VIII, IB, IIB, IIIA, IVA, and VA of the Periodic Table of Elements. Exemplary elements include without limitation manganese, cobalt, nickel, copper, zinc, vanadium, niobium, tantalum, gallium, germanium, arsenic, antimony, bismuth, tellurium and other transition elements.

Exemplary heteropoly complex anions include, but are not limited to, phosphomolybdates, such as but not limited to, [PMo₁₂O₄₀]⁻³, wherein P⁺⁵ is the central atom or heteroatom, [PMo₁₀V₂O₄₀]^{-5,}; silicon molybdates, such as but not limited to, [SiMo₁₁NiO₄₀H₂]⁻⁶, wherein Si⁺⁴ is the central atom; manganese molybdates, such as but not limited to, [MnMo₉O₃₂]⁻⁶, wherein Mn⁺⁴ is the central atom; silicon tungstates, such as but not limited to, [SiW₁₂O₄₀]⁻⁴, wherein Si⁺⁴ is the central atom; tellurium molybdates, such as but not limited to, [TeMo₆O₂₄]⁻⁶, wherein Te⁺⁶ is the central atom; arsenic molybdates, such as but not limited to, [As₂Mo₁₈O₆₂]⁻⁶, wherein As⁺⁵ is the central atom; manganese niobiates, such as but not limited to, [MnNb12O₃₆]⁻¹², wherein Mn⁺⁴ is the central atom; and mixtures thereof. Currently preferred heteropoly complex anions are phosphomolybdates.

The heteropoly complex anions which have been structurally characterized can be divided into the broad groups, depending upon the heteroatom [X], transition metal atom [M] stoichiometry, and upon the coordination number of the heteroatom (that is, the number of points at which M is attached to the heteroatom in the complex). The heteropoly complex anions can be classified according to the ratio of the number of the central atoms to the peripheral molybdenum or other such atoms. For example, the different types of known heteropoly complex anions of molybdate show the following X:M ratio with one or more central atoms: X:M = 1:12, 1:11, 1:10, 1:9, 1:6, 2:10, 2:17, 2:5, 4:12, 1m:6m (m unknown) and 1:1 heteropoly complex anions. The known tungstates include all of the above in addition to 2:18, 2:17 and 2:4:18.

In a preferred embodiment of the invention, the transition metal of the heteropoly complex anion is molybdenum or tungsten, and more preferably molybdenum. A particularly preferred solution includes the heteropoly complex anion [PMo₁₂O₄₀]⁻³.

Transition metal compounds or salts useful in the invention are selected from compounds of transition metals which are capable of providing the transition metal element as ions in aqueous ammonia solution for complexing with the chosen heteropoly anion. The transition metal element of the transition metal compound can be the same or different from the transition metal of the heteropoly anion complex. Exemplary transition metal compounds or salts include nitrates, halides, oxides, preferably a halide, of the transition metal elements such as cobalt, nickel, tungsten, zirconium, manganese, chromium, and mixtures thereof.

The compounds or salts of the metallic elements of Groups IIIa to VIa of the Periodic Table of Elements are also selected from compounds which are capable of providing the metallic elements of Group IIIa to Via as ions in ammonium solutions. Exemplary compounds or salts of the metallic elements of Groups IIIa to VIa include oxides, sulfides, halides, nitrates, preferably a halide, of metallic elements of Group IIIa to VIa, such as antimony, germanium. For example, the above-referenced U.S. Patent Application Serial No. 08/896,110, filed July 17, 1997, describes halides of metallic elements of Group Va of the Periodic Table of Elements which can be useful in the invention, although other compounds can also be useful in this invention. Exemplary halides of Group Va metallic elements (i.e., arsenic, antimony, and bismuth) include antimony bromide, arsenic bromide, and bismuth bromide, and mixtures thereof.

Salts of the Group Va metallic elements (i.e., arsenic, antimony, and bismuth) can include, for example, oxides and halides, such as bromide, chloride, or iodide, and preferably is bromide. Exemplary halides of Group Va metallic elements useful as corrosion inhibiting agents in the absorption solutions of the invention include antimony bromide (SbBr₃), arsenic bromide, and bismuth bromide, and mixtures thereof. These Group Va metallic elements as ions in solution can exhibit corrosion inhibiting properties in absorption refrigeration systems.

The heteropoly complex anions, transition metal compounds, compounds of metallic elements of Groups IIIa and VIa, and salts of Group Va metallic elements are present in the compositions of the invention in amounts sufficient to provide the desired corrosion inhibiting effect. This amount can vary depending upon various factors, such as the solubility of the compounds in the absorption solution, the nature of the ions, temperatures in the machine, concentration of ammonia in aqueous solution, alkali metal hydroxides and/or alkaline metal hydroxides in solution, metals used in the construction of the unit, the presence of air. Preferably, the absorption solutions of the invention include at least one heteropoly complex anion in an amount ranging from about 100 parts per million (ppm) to about 3000 ppm, more preferably about 200 ppm to about 800 ppm. Transition metal compounds or compounds of the metallic elements of Group IIIa to Via can be present in the solutions in amounts ranging from about 10 parts per million (ppm) to about 3000 ppm. Salts of metallic elements of Group Va can be present in an amount ranging from about 10 parts per million (ppm) to about 5000 ppm, and preferably from about 150 ppm to about 400 ppm. The corrosion inhibiting agents can also be useful in amounts outside of these ranges, so long as the agent is present in an amount sufficient to provide corrosion inhibition properties.

The aqueous ammonium absorption solution can include ammonia in conventional amounts. An exemplary solution includes ammonia in an amount from about 1 to about 50 weight percent, preferably about 5 to about 50 weight percent, based on the total weight of the solution, although as the skilled artisan will appreciate, amounts outside of this range can be used as well.

The alkali metal hydroxide and/or alkaline earth metal hydroxide absorption solutions can include alkali metal hydroxides, alkaline earth metal hydroxides and mixtures of alkali metal hydroxides and alkaline earth metal hydroxides in conventional amounts. An exemplary alkali metal and/or alkaline earth metal hydroxide absorption solution includes alkali metal and/or alkaline earth metal hydroxide in an amount from about 20 to about 80 weight percent, preferably about 10 to about 70 weight percent, based on the total weight of the solution, although as the skilled artisan will appreciate, amounts outside of this range can be used as well. The alkali metal and/or alkaline earth metal hydroxide can be, for example, calcium hydroxide, potassium hydroxide, cesium hydroxide and mixtures thereof.

Further, the absorption solution can include lithium nitrate, molybdate and/or chromate in conventional amounts. Still further, the absorption solution can include halides, such as zinc halides, which can be particularly useful in high temperature applications (generally about 450°F and higher). The zinc halides can be present in amounts up to about 50 weight percent.

The present invention also provides processes for inhibiting the corrosion of an absorption machine (such as a refrigeration machines) resulting from the presence of aqueous ammonium, alkali metal hydroxide and/or alkaline earth metal hydroxide absorbent solutions. In the process of the invention, the above described aqueous ammonia, alkali metal hydroxide and/or alkaline earth metal hydroxide solutions which include at least one heteropoly anion complex, or a mixture of the heteropoly anion complex with a transition metal compound or a compound of the metallic elements of Groups IIIa to VIa, or a halide of a metallic element of Group Va of the Periodic Table of Elements is circulated in an absorption machine under conditions and in amounts sufficient to provide a corrosion inhibiting effect. As the skilled artisan will appreciate, the environment or conditions, such as temperature and/or pressure, of different refrigeration machines can vary. Typically, the temperature of the machine can be as high as 550°F, and higher. The solutions are particularly advantageous for high temperature applications.

The present invention will be further illustrated by the following nonlimiting examples.

### Example

Aqueous ammonium solutions (3%) having different corrosion inhibitors were prepared. Sodium chromate was the corrosion inhibitor in one solution. Sodium chromate is a corrosion inhibitor conventionally used in such machines. Solutions in accordance with the present invention including the heteropoly complex anion phosphomolybdic acid (PMA) and this,complex in combination with an antimony halide [Note to Shyam - did you use] were also prepared.

The solutions were tested to determine the effectiveness of the corrosion inhibitors. Specifically tests were performed in a pressure vessel autoclave with temperature control of (+/- 2°F). The solutions used in the tests were prepared as 3% ammonia concentration. The alkalinity of the solutions was adjusted with lithium hydroxide to control the solution pH at a level that optimized the performance of each chemical or generally accepted in the industry.

Pre-weighed metal coupons of C 1018 carbon steel were placed in and above the solution contained in a 2 liter cylinder made of inconel-600 material which fits into the furnace. In order to eliminate the air from the headspace, the cylinder containing the solution was evacuated using a vacuum pump prior to starting the test. The solution was heated to 400°F and held at this temperature for a period of 168 hours.

Upon completion, the test coupons were removed and cleaned by ASTM method G1-90. The corrosion rate was calculated from the weight loss. The level of hydrogen generated during the test was also determined at the end of each test. The results are set forth in Table 1 below.

**Table 1**

| Corrosion rate of carbon steel in aqua-ammonia solution (3% ammonia solution) at 400°F in one week. | | | | |
|---|---|---|---|---|
| Additive | Corrosion rate (mils per year) for carbon steel in | | Hydrogen generated mg/in²/week | Surface evaluation |
| | Liquid | Vapor | | |
| Sodium chromate (2000 ppm) | 2.08 | 3.16 | 0.99 | Crevice and pitting corrosion in liquid or vapor |
| PMA (300 ppm) | 2.00 | 2.77 | 0.48 | No crevice or pitting corrosion. Excellent protection in liquid and vapor |
| PMA/Sb complex (400 ppm) | 0.25 | 0.20 | 0.93 | No crevice or pitting corrosion. Excellent protection in liquid and vapor |

As the data illustrates, the corrosion inhibitors of this invention resulted in excellent corrosion protection since the coupons from these tests showed no crevice and pitting corrosion. On the other hand, coupons from the chromate inhibited solution showed crevice and pitting corrosion. Also, the corrosion rate and hydrogen levels observed for the chromate inhibited solution were higher.

Specifically, in the presence of chromate inhibitor, the hydrogen level is 0.99 mg/in²/week. Compared to sodium chromate, PMA corrosion inhibitor showed significant lowering of hydrogen generation and a small decrease in corrosion rate. The hydrogen level was reduced by almost 50 percent. The coupons exposed to solution containing PMA inhibitor showed excellent protection due to formation of a stable film. No crevice or pitting corrosion was observed.

When the PMA/antimony complex was used, corrosion rate was significantly diminished. The coupons showed a protective film formation. No crevice or pitting corrosion was observed. With this complex a lesser reduction in hydrogen was observed as compared to PMA alone.

Many modifications and other embodiments of the invention will come to mind to one skilled in the art to which this invention pertains having the benefit of the teachings presented in the foregoing descriptions.

## Claims

1. An absorption solution comprising aqueous ammonia and at least one heteropoly complex anion of a transition metal element present in an amount sufficient to provide a corrosion inhibiting effect.

2. The solution of Claim 1, said solution further comprising at least one additional additive in an amount sufficient to provide a corrosion inhibiting effect.

3. The solution of Claim 1, wherein said at least one heteropoly complex anion comprises at least one transition metal atom having corrosion inhibiting properties in absorption refrigeration systems.

4. The solution of Claim 1, wherein said at least one heteropoly complex anion comprises a compound selected from the group consisting of [XₐM_{b}O_{c}]⁻ⁿ, [XₐZ_{d}M_{b}O_{c}]⁻ⁿ, [XₐZ_{d}M_{b}O_{c}Hₑ]⁻ⁿ, [XₐM_{b}O_{c}(OH)_{f}]⁻ⁿ, [XₐZ_{d}M_{b}O_{c}(OH)_{f}]⁻ⁿ, and mixtures thereof, wherein:
X and Z are central heteroatoms selected from the group consisting of elements from Groups I-VIII of the Periodic Table of Elements;
a is 1 or 2;
d is an integer from 0 to 4;
M_{b}O_{c}, M_{b}O_{c}Hₑ, and M_{b}O_{c}(OH)_{f} are oxoanions in which M is a transition metal element; b is an integer from 5 to 22; c is an integer from 20 to 70; e is an integer from 0 to 6; and f is an integer from 0 to 3; and
n is the charge of the anion.

5. The solution of Claim 4, wherein:
X is phosphorus, silicon, manganese, tellurium or arsenic; and
M is molybdenum or tungsten.

6. The solution of Claim 1, wherein said at least one heteropoly complex anion is selected from the group consisting of phosphomolybdates, silicon molybdates, manganese molybdates, silicon tungstates, tellurium molybdates, arsenic molybdates, and mixtures thereof.

7. The solution of Claim 1, wherein said at least one heteropoly complex anion comprises a phosphomolybdate of the formula [PMo₁₂O₄₀]⁻³.

8. The solution of Claim 2, wherein said at least one additional additive comprises at least one transition metal compound.

9. The solution of Claim 8, wherein said at least one transition metal compound is selected from compounds of transition metals which are capable of providing the transition metal element as ions in aqueous ammonia.

10. The solution of Claim 8, wherein said at least one transition metal compound comprises a transition metal which is different from the transition metal of the heteropoly anion complex.

11. The solution of Claim 8, wherein said at least one transition metal compound comprises a salt of a transition metal element.

12. The solution of Claim 11, wherein said salt comprises a compound selected from the group consisting of nitrates, halides, and oxides of transition metal elements, and mixtures thereof.

13. The solution of Claim 11, wherein said transition metal is selected from the group consisting of cobalt, nickel, tungsten, zirconium, manganese, chromium, and mixtures thereof.

14. The solution of Claim 11, wherein said salt is a halide of a transition metal element.

15. The solution of Claim 2, wherein said at least one additional additive comprises at least one compound of the metallic elements of Groups IIIa to VIa of the Periodic Table of Elements.

16. The solution of Claim 15, wherein said at least one compound of the metallic elements of Groups IIIa to VIa of the Periodic Table of Elements comprises a compound capable of providing the metallic elements of Group IIIa to Via as ions in alkali metal halide solutions.

17. The solution of Claim 15, wherein said at least one compound of the metallic elements of Groups IIIa to VIa of the Periodic Table of Elements comprises at least one salt of a metallic element of Group IIIa to VIa.

18. The solution of Claim 17, wherein said salt comprises a compound selected from the group consisting of oxides, sulfides, halides, nitrates, and mixtures thereof of metallic elements of Group IIIa to VIa.

19. The solution of Claim 17, wherein said salt comprises a halide of a metallic element of Groups IIIa to Via

20. The solution of Claim 17, wherein said at least one compound of the metallic elements of Groups IIIa to Via of the Periodic Table of Elements comprises antimony as the metallic element of Groups IIIa to VIa.

21. The solution of Claim 17, wherein said at least one compound of the metallic elements of Groups IIIa to VIa of the Periodic Table of Elements comprises a compound selected from the group consisting of antimony bromide, germanium bromide, arsenic bromide, and bismuth bromide, and mixtures thereof.

22. The solution of Claim 1, wherein ammonia is present in an amount from about 1 to about 50 weight percent, based on the total weight of the solution.

23. An absorption solution for refrigeration systems, comprising aqueous ammonia, at least one heteropoly complex anion of a transition metal element, and at least one additional additive comprising a compound selected from the group consisting of transition metal salts, salts of the metallic elements of Groups IIIa to VIa of the Periodic Table of Elements, and mixtures thereof, said at least one heteropoly complex anion of a transition metal element and said at least one additional additive present in an amount sufficient to provide a corrosion inhibiting effect.

24. The solution of Claim 23, wherein said at least one heteropoly complex anion of a transition metal element comprises a phosphomolybdate, and said least one additional additive comprises at least one transition metal salt.

25. The solution of Claim 24, wherein said at least one transition metal salt comprises at least one halide of cobalt, nickel, tungsten, zirconium, manganese, chromium, and mixtures thereof.

26. The solution of Claim 23, wherein said at least one heteropoly complex anion of a transition metal element comprises a phosphomolybdate and said at least one additional additive comprises at least one salt of a metallic element of Group IIIa to VIa.

27. The solution of Claim 26, wherein said at least one salt comprises a halide of the metallic elements of Group Va of the Periodic Table of Elements.

28. The solution of Claim 27, wherein said halide comprises a compound selected from the group consisting of antimony bromide (SbBr₃), arsenic bromide, bismuth bromide and mixtures thereof.

29. The solution of Claim 23, wherein said at least one heteropoly complex anion of a transition metal element is [PMo₁₂O₄₀]⁻³.

30. The solution of Claim 23, wherein ammonia is present in an amount from about 1 to about 50 weight percent, based on the total weight of the solution.

31. An absorption solution for refrigeration systems, comprising at aqueous ammonia, at least one phosphomolybdate, and at least one transition metal halide, said phosphomolybdate and said transition metal halide present in an amount sufficient to provide a corrosion inhibiting effect.

32. The solution of Claim 31, wherein said phosphomolybdate is [PMo₁₂O₄₀]⁻³, and said transition metal halide is cobalt halide or nickel halide.

33. The solution of Claim 31, wherein ammonia is present in an amount from about 1 to about 50 weight percent, based on the total weight of the solution.

34. An absorption solution for refrigeration systems, comprising aqueous ammonia, at least one phosphomolybdate, and at least one halide of the metallic elements of Group Va of the Periodic Table of Elements, said phosphomolybdate and said halide present in an amount sufficient to provide a corrosion inhibiting effect.

35. The solution of Claim 34, wherein said phosphomolybdate is [PMo₁₂O₄₀]⁻³, and said halide is antimony bromide (SbBr₃).

36. The solution of Claim 34, wherein ammonia is present in an amount from about 1 to about 50 weight percent, based on the total weight of the solution.

37. A process for inhibiting the corrosion of a machine resulting from the presence of absorbent solutions comprising aqueous ammonia, the process comprising circulating in a machine said absorption solution comprising aqueous ammonia and at least one heteropoly complex anion of a transition metal element, said at least one heteropoly complex anion of a transition metal element present in an amount sufficient to provide a corrosion inhibiting effect.

38. The process of Claim 37, wherein said solution further comprises at least one additional additive comprising a compound selected from the group consisting of transition metal compounds, compounds of the metallic elements of Groups IIIa to VIa of the Periodic Table of Elements, and mixtures thereof, said at least one additional additive present in an amount sufficient to provide a corrosion inhibiting effect.

39. The process of Claim 37, wherein during said circulating step, said at least one heteropoly complex anion forms a protective layer on a surface within said machine.

40. The process of Claim 37, wherein during said circulating step said solution is exposed to temperatures ranging from about 150°F to about 550°F.

41. The process of Claim 37, wherein said absorbent solution further comprises lithium nitrate and zinc halide.

42. The process of Claim 37, wherein ammonia is present in an amount from about 1 to about 50 weight percent, based on the total weight of the solution.

## Patentansprüche

1. Absorptionslösung, die wässriges Ammoniak aufweist und die mindestens ein heteropoly-komplexiertes Anion eines metallischen Übergangselements aufweist, das in einer ausreichenden Menge vorliegt, um einen korrosionshemmenden Effekt bereitzustellen.

2. Lösung nach Anspruch 1, wobei die Lösung ferner mindestens einen weiteren Zusatzstoff in einer ausreichenden Menge aufweist, um einen korrosionshemmenden Effekt bereitzustellen.

3. Lösung nach Anspruch 1, wobei das mindestens eine heteropoly-komplexierte Anion mindestens ein Übergangsmetallatom umfasst, das in Absorptionskältesystemen korrosionshemmende Eigenschaften aufweist.

4. Lösung nach Anspruch 1, wobei das mindestens eine heteropoly-komplexierte Anion eine Verbindung aufweist, die aus der Gruppe ausgewählt ist, die aus
[XₐM_{b}O_{c}]⁻ⁿ, [XₐZ_{d}M_{b}O_{c}]⁻ⁿ, [XₐZ_{d}M_{b}O_{c}Hₑ]⁻ⁿ, [XₐM_{b}O_{c}(OH)_{f}]⁻ⁿ, [XₐZ_{d}M_{b}O_{c}(OH)_{f}]⁻ⁿ
und Mischungen hiervon besteht, wobei
X und Z zentrale Heteroatome sind, die aus der Gruppe ausgewählt sind, die aus Elementen der Gruppen I-VIII des Periodensystems der Elemente bestehen,
a 1 oder 2 ist,
d eine ganze Zahl von 0 bis 4 ist,
M_{b}O_{c}, M_{b}O_{c}Hₑ und M_{b}O_{c}(OH)_{f} Oxoanionen sind, wobei M ein Übergangsmetallelement ist, b eine ganze Zahl von 5 bis 22 ist, c eine ganze Zahl von 20 bis 70 ist, e eine ganze Zahl von 0 bis 6 ist und f eine ganze Zahl von 0 bis 3 ist, und
n die Ladung des Anions ist.

5. Lösung nach Anspruch 4, wobei
X Phosphor, Silizium, Mangan, Tellur oder Arsen ist und
M Molybdän oder Wolfram ist.

6. Lösung nach Anspruch 1, wobei das mindestens eine heteropoly-komplexierte Anion aus der Gruppe ausgewählt ist, die aus Phosphomolybdaten, Siliziummolybdaten, Manganmolybdaten, Siliziumwolframaten, Tellurmolybdaten, Arsenmolybdaten und Mischungen hiervon besteht.

7. Lösung nach Anspruch 1, wobei das mindestens eine heteropoly-komplexierte Anion ein Phosphomolybdat mit der Formel [PMo₁₂O₄₀]⁻³ aufweist.

8. Lösung nach Anspruch 2, wobei der mindestens eine weitere Zusatzstoff mindestens eine Übergangsmetallverbindung aufweist.

9. Lösung nach Anspruch 8, wobei die mindestens eine Übergangsmetallverbindung aus Verbindungen von Übergangsmetallen ausgewählt ist, die dazu geeignet sind, das Übergangsmetallelement als Ionen in wässrigem Ammoniak bereitzustellen.

10. Lösung nach Anspruch 8, wobei die mindestens eine Übergangsmetallverbindung ein Übergangsmetall aufweist, das von dem Übergangsmetall des Heteropoly-Anionen-Komplexes verschieden ist.

11. Lösung nach Anspruch 8, wobei die mindestens eine Übergangsmetallverbindung ein Salz eines Übergangsmetallelements aufweist.

12. Lösung nach Anspruch 11, wobei das Salz eine Verbindung aufweist, die aus der Gruppe ausgewählt ist, die aus Nitraten, Halogeniden und Oxiden von Übergangsmetallelementen und Mischungen hiervon besteht.

13. Lösung nach Anspruch 11, wobei das Übergangsmetall aus der Gruppe ausgewählt ist, die aus Kobalt, Nickel, Wolfram, Zirkon, Mangan, Chrom und Mischungen hiervon besteht.

14. Lösung nach Anspruch 11, wobei das Salz ein Halogenid eines Übergangsmetallelements ist.

15. Lösung nach Anspruch 2, wobei der mindestens eine weitere Zusatzstoff mindestens eine Verbindung der metallischen Elemente der Gruppen IIIa bis Via des Periodensystems der Elemente aufweist.

16. Lösung nach Anspruch 15, wobei die mindestens eine Verbindung der metallischen Elemente der Gruppen IIIa bis VIa des Periodensystems der Elemente eine Verbindung aufweist, die dazu geeignet ist, die metallischen Elemente der Gruppe IIIa bis VIa als Ionen in Lösungen von Alkalimetall-Halogeniden bereitzustellen.

17. Lösung nach Anspruch 15, wobei die mindestens eine Verbindung der metallischen Elemente der Gruppen IIIa bis VIa des Periodensystems der Elemente mindestens ein Salz eines metallischen Elements der Gruppe IIIa bis Via aufweist.

18. Lösung nach Anspruch 17, wobei das Salz eine Verbindung aufweist, die aus der Gruppe ausgewählt ist, die aus Oxiden, Sulfiden, Halogeniden und Nitraten der metallischen Elemente der Gruppe IIIa bis VIa und Mischungen hiervon besteht.

19. Lösung nach Anspruch 17, wobei das Salz ein Halogenid eines metallischen Elements der Gruppen IIIa bis VIa aufweist.

20. Lösung nach Anspruch 17, wobei die mindestens eine Verbindung der metallischen Elemente der Gruppen IIIa bis Via des Periodensystems der Elemente Antimon als das metallische Element der Gruppen IIIa bis VIa aufweist.

21. Lösung nach Anspruch 17, wobei die mindestens eine Verbindung der metallischen Elemente der Gruppen IIIa bis VIa des Periodensystems der Elemente eine Verbindung aufweist, die aus der Gruppe ausgewählt ist, die aus Antimonbromid, Germaniumbromid, Arsenbromid, Wismutbromid und Mischungen hiervon besteht.

22. Lösung nach Anspruch 1, wobei Ammoniak in einer auf das Gesamtgewicht der Lösung bezogenen Menge von ungefähr 1 bis ungefähr 50 Gewichtsprozent vorliegt.

23. Absorptionslösung für Kältesysteme, die wässriges Ammoniak, mindestens ein heteropoly-komplexiertes Anion eines Übergangsmetallelements und mindestens einen weiteren Zusatzstoff aufweist, der eine Verbindung aufweist, die aus der Gruppe ausgewählt ist, die aus Übergangsmetallsalzen, Salzen der metallischen Elemente der Gruppen IIIa bis VIa des Periodensystems der Elemente und Mischungen hiervon besteht, wobei das mindestens eine heteropoly-komplexierte Anion eines Übergangsmetallelements und der mindestens eine weitere Zusatzstoff in einer ausreichenden Menge vorliegen, um einen korrosionshemmenden Effekt bereitzustellen.

24. Lösung nach Anspruch 23, wobei das mindestens eine heteropoly-komplexierte Anion eines Übergangsmetallelements ein Phosphomolybdat aufweist und wobei der mindestens eine weitere Zusatzstoff mindestens ein Übergangsmetallsalz aufweist.

25. Lösung nach Anspruch 24, wobei das mindestens eine Übergangsmetallsalz mindestens ein Halogenid von Kobalt, Nickel, Wolfram, Zirkon, Mangan, Chrom und Mischungen hiervon aufweist.

26. Lösung nach Anspruch 23, wobei das mindestens eine heteropoly-komplexierte Anion eines Übergangsmetallelements ein Phosphomolybdat aufweist und wobei der mindestens eine weitere Zusatzstoff mindestens ein Salz eines metallischen Elements der Gruppe IIIa bis VIa aufweist.

27. Lösung nach Anspruch 26, wobei das mindestens eine Salz ein Halogenid der metallischen Elemente der Gruppe Va des Periodensystems der Elemente aufweist.

28. Lösung nach Anspruch 27, wobei das Halogenid eine Verbindung aufweist, die aus der Gruppe ausgewählt ist, die aus Antimonbromid (SbBr₃), Arsenbromid, Wismutbromid und Mischungen hiervon besteht.

29. Lösung nach Anspruch 23, wobei das mindestens eine heteropoly-komplexierte Anion eines Übergangsmetallelements [PMo₁₂O₄₀]⁻³ ist.

30. Lösung nach Anspruch 23, wobei Ammoniak in einer auf das Gesamtgewicht der Lösung bezogenen Menge von ungefähr 1 bis ungefähr 50 Gewichtsprozent vorliegt.

31. Absorptionslösung für Kältesysteme, die wässriges Ammoniak, mindestens ein Phosphomolybdat und mindestens ein Übergangsmetallhalogenid aufweist, wobei das Phosphomolybdat und das Übergangsmetallhalogenid in einer ausreichenden Menge vorliegen, um einen korrosionshemmenden Effekt bereitzustellen.

32. Lösung nach Anspruch 31, wobei das Phosphomolybdat [PMo₁₂O₄₀]⁻³ ist und wobei das Übergangsmetallhalogenid Kobalthalogenid oder Nickelhalogenid ist.

33. Lösung nach Anspruch 31, wobei Ammoniak in einer auf das Gesamtgewicht der Lösung bezogenen Menge von ungefähr 1 bis ungefähr 50 Gewichtsprozent vorliegt.

34. Eine Absorptionslösung für Kältesysteme, die wässriges Ammoniak, mindestens ein Phosphomolybdat und mindestens ein Halogenid der metallischen Elemente der Gruppe Va des Periodensystems der Elemente aufweist, wobei das Phosphomolybdat und das Halogenid in einer ausreichenden Menge vorliegen, um einen korrosionshemmenden Effekt bereitzustellen.

35. Lösung nach Anspruch 34, wobei das Phosphomolybdat [PMo₁₂O₄₀]⁻³ ist und wobei das Halogenid Antimonbromid (SbBr₃) ist.

36. Lösung nach Anspruch 34, wobei Ammoniak in einer auf das Gesamtgewicht der Lösung bezogenen Menge von ungefähr 1 bis ungefähr 50 Gewichtsprozent vorliegt.

37. Verfahren zum Hemmen der Korrosion einer Maschine, die aus der Anwesenheit von absorbierenden, wässriges Ammoniak enthaltenden Lösungen resultiert, wobei das Verfahren das Zirkulieren der Absorptionslösung in einer Maschine aufweist, wobei die Absorptionslösung wässriges Ammoniak und mindestens ein heteropoly-komplexiertes Anion eines Übergangsmetallelements aufweist und wobei das mindestens eine heteropoly-komplexierte Anion eines Übergangsmetallelements in einer ausreichenden Menge vorliegt, um einen korrosionshemmenden Effekt bereitzustellen.

38. Verfahren nach Anspruch 37, wobei die Lösung ferner mindestens einen weiteren Zusatzstoff aufweist, der eine Verbindung aufweist, die aus der Gruppe ausgewählt ist, die aus Übergangsmetallverbindungen, Verbindungen der metallischen Elemente der Gruppen IIIa bis VIa des Periodensystems der Elemente und Mischungen hiervon besteht, und wobei der mindestens eine weitere Zusatzstoff in einer ausreichenden Menge vorliegt, um einen korrosionshemmenden Effekt bereitzustellen.

39. Verfahren, nach Anspruch 37, wobei das mindestens eine heteropoly-komplexierte Anion während des Zirkulationsschritts eine Schutzschicht auf einer Oberfläche innerhalb der Maschine ausbildet.

40. Verfahren nach Anspruch 37, wobei die Lösung während des Zirkulationsschritts Temperaturen im Bereich von ungefähr 150° F bis ungefähr 550° F ausgesetzt wird.

41. Verfahren nach Anspruch 37, wobei die absorbierende Lösung des Weiteren Lithiumnitrat und Zinkhalogenid aufweist.

42. Verfahren nach Anspruch 37, wobei Ammoniak in einer auf das Gesamtgewicht der Lösung bezogenen Menge von ungefähr 1 bis ungefähr 50 Gewichtsprozent vorliegt.

## Revendications

1. Une solution d'absorption comprenant de l'ammoniaque aqueuse et au moins un anion hétéropoly complexe d'un élément de métal de transition en quantité suffisante pour fournir un effet d'inhibition de la corrosion.

2. La solution de la revendication 1, ladite solution comprenant en outre au moins un additif additionnel en quantité suffisante pour fournir un effet d'inhibition de la corrosion.

3. La solution de la revendication 1, dans laquelle ledit au moins un anion hétéropoly complexe comprend au moins un atome de métal de transition ayant des propriétés d'inhibition de la corrosion dans des systèmes de réfrigération à absorption.

4. La solution de la revendication 1, dans laquelle ledit au moins un anion hétéropoly complexe comprend un composé choisi dans le groupe constitué par[XₐM_{b}O_{c}]⁻ⁿ,[XₐZ_{d}O_{c}]⁻ⁿ,[XₐZ_{d}M_{b}O_{c}Hₑ]⁻ⁿ,[XₐM_{b}O_{c}(OH)_{f}]⁻ⁿ,[XₐZ_{d}M_{b}O_{c}(OH)_{f}]⁻ⁿ et des mélanges de ceux-ci, où :
X et Z sont des hétéroatomes choisis dans le groupe constitué par des éléments des groupes I-VIII du tableau périodique des éléments ;
a est 1 ou 2 ;
d est un entier de 0 à 4 ;
M_{b}O_{c},M_{b}O_{c}Hₑ et M_{b}O_{c}(OH)_{f} sont des oxoanions dans lesquels M est un élément de métal de transition ; b est un entier de 5 à 22 ; c est un entier de 20 à 70 ; e est un entier de 0 à 6 ; et f est un entier de 0 à 3 ; et
n est la charge de l'anion.

5. La solution de la revendication 4, dans laquelle :
X est du phosphore, du silicium, du manganèse, du tellure ou de l'arsenic ; et
M est du molybdène ou du tungstène.

6. La solution de la revendication 1, dans laquelle ledit au moins un anion hétéropoly complexe est choisi dans le groupe constitué des phosphomolybdates, des molybdates de silicium, des molybdates de manganèse, des tungstates de silicium, des molybdates de tellure, des molybdates d'arsenic et des mélanges de ceux-ci.

7. La solution de la revendication 1, dans laquelle ledit au moins un anion hétéropoly complexe comprend un phosphomolybdate de la formule [PMo₁₂O₄₀]⁻³.

8. La solution de la revendication 2, dans laquelle ledit au moins un additif additionnel comprend au moins un composé de métal de transition.

9. La solution de la revendication 8, dans laquelle au moins un composé de métal de transition est choisi parmi les composés de métaux de transition à 6 capables de fournir l'élément de métal de transition sous forme d'ions dans de l'ammoniaque aqueuse.

10. La solution de la revendication 8, dans laquelle ledit au moins un composé de métal de transition comprend un métal de transition qui est différent du métal de transition du complexe d'anion hétéropoly.

11. La solution de la revendication 8, dans laquelle ledit au moins un composé de métal de transition comprend un sel d'un élément de métal de transition.

12. La solution de la revendication 11, dans laquelle ledit sel comprend un composé choisi dans le groupe constitué par les nitrates, les halogénures et les oxydes d'éléments de métaux de transition et les mélanges de ceux-ci.

13. La solution de la revendication 11, dans laquelle ledit métal de transition est choisi dans le groupe constitué par le cobalt, le nickel, le tungstène, le zirconium, le manganèse, le chrome et les mélanges de ceux-ci.

14. La solution de la revendication 11, dans laquelle ledit sel est un halogénure d'un élément de métal de transition.

15. La solution de la revendication 2, dans laquelle ledit au moins un additif additionnel comprend au moins un composé des éléments métalliques des groupes IIIa à VIa du tableau périodique des éléments.

16. La solution de la revendication 15, dans laquelle ledit au moins un composé des éléments métalliques des groupes IIIa à VIa du tableau périodique des éléments comprend un composé capable de fournir les éléments métalliques des groupes IIIa à VIa sous forme d'ions dans des solutions d'halogénure de métal alcalin.

17. La solution de la revendication 15, dans laquelle ledit au moins un composé des éléments métalliques des groupes IIIa à VIa du tableau périodique des éléments comprend au moins un sel d'un élément métallique des groupes IIIa à VIa.

18. La solution de la revendication 17, dans laquelle ledit sel comprend un composé choisi dans le groupe constitué par les oxydes, les sulfures, les halogénures, les nitrates des éléments métalliques des groupes IIIa à VIa de la classification périodique des éléments et leurs mélanges.

19. La solution de la revendication 17, dans laquelle ledit sel comprend un halogénure d'un élément métallique des groupes IIIa à VIa.

20. La solution de la revendication 17, dans laquelle ledit au moins un composé des éléments métalliques des groupes IIIa à VIa du tableau périodique des éléments comprend l'antimoine en tant que l'élément métallique des groupes IIIa à VIa.

21. La solution de la revendication 17, dans laquelle ledit au moins un composé des éléments métalliques des groupes IIIa à Via du tableau périodique des éléments comprend un composé choisi dans le groupe constitué par le bromure d'antimoine, le bromure de germanium, le bromure d'arsenic et le bromure de bismuth et les mélanges de ceux-ci.

22. La solution de la revendication 1, dans laquelle l'ammoniaque est présente en quantité d'environ 1 à environ 50 pour cent en poids sur la base du poids total de la solution.

23. Une solution d'absorption pour des systèmes de réfrigération comprenant de l'ammoniaque aqueuse, au moins un anion hétéropoly complexe d'un élément de métal de transition et au moins un additif additionnel comprenant un composé choisi dans le groupe constitué par les sels de métaux de transition, les sels des éléments métalliques des groupes IIIa à Via du tableau périodique des éléments et les mélanges de ceux-ci, ledit au moins un anion hétéropoly complexe d'un élément de métal de transition et ledit au moins un additif additionnel étant présents en quantité suffisante pour fournir un effet d'inhibition de la corrosion.

24. La solution de la revendication 23, dans laquelle ledit au moins un anion hétéropoly complexe d'un élément de métal de transition comprend un phosphomolybdate et ledit au moins un additif additionnel comprend au moins un sel d'un métal de transition.

25. La solution de la revendication 24, dans laquelle ledit au moins un sel de métal de transition comprend au moins un halogénure de cobalt, de nickel, de tungstène, de zirconium, de manganèse, de chrome et des mélanges de ceux-ci.

26. La solution de la revendication 23, dans laquelle ledit au moins un anion hétéropoly complexe d'un élément de métal de transition comprend un phosphomolybdate et ledit au moins un additif additionnel comprend au moins un sel d'un élément métallique des groupes IIIa à VIa.

27. La solution de la revendication 26, dans laquelle ledit au moins un sel comprend un halogénure des éléments métalliques du groupe Va du tableau périodique des éléments.

28. La solution de la revendication 27, dans laquelle ledit halogénure comprend un composé choisi dans le groupe constitué par le bromure d'antimoine (SbBr₃), le bromure de bismuth et les mélanges de ceux-ci.

29. La solution de la revendication 23, dans laquelle ledit au moins un anion hétéropoly complexe d'un élément de métal de transition est [PMo₁₂O₄₀]⁻³.

30. La solution de la revendication 23, dans laquelle l'ammoniaque est présente en quantité d'environ 1 à environ 50 pour cent en poids sur la base du poids total de la solution.

31. Une solution d'absorption pour des systèmes de réfrigération comprenant de l'ammoniaque aqueuse, au moins un phosphomolybdate et au moins un halogénure d'un métal de transition, ledit phosphomolybdate et ledit halogénure de métal de transition étant présents en quantité suffisante pour fournir un effet d'inhibition de la corrosion.

32. La solution de la revendication 31, dans laquelle ledit phosphomolybdate est [PMo₁₂O₄₀]⁻³ et ledit halogénure de métal de transition est un halogénure de cobalt ou un halogénure de nickel.

33. La solution de la revendication 31, dans laquelle l'ammoniaque est présente en quantité d'environ 1 à environ 50 pour cent en poids sur la base du poids total de la solution.

34. Une solution d'absorption pour des systèmes de réfrigération comprenant de l'ammoniaque aqueuse, au moins un phosphomolybdate et au moins un halogénure des éléments métalliques du groupe Va du tableau périodique des éléments, ledit phosphomolybdate et ledit halogénure étant présents en quantité suffisante pour fournir un effet d'inhibition de la corrosion.

35. La solution de la revendication 34, dans laquelle ledit phosphomolybdate est [PMo₁₂O₄₀]⁻³ et ledit halogénure est du bromure d'antimoine (SbBr₃).

36. La solution de la revendication 34, dans laquelle l'ammoniaque est présente en quantité d'environ 1 à environ 50 pour cent en poids sur la base du poids total de la solution.

37. Un procédé pour inhiber la corrosion d'une machine résultant de la présence de solutions absorbantes comprenant de l'ammoniaque aqueuse, le procédé comprenant la mise en circulation dans une machine de ladite solution d'absorption comprenant de l'ammoniaque aqueuse et au moins un anion hétéropoly complexe d'un élément de métal de transition, ledit au moins un anion hétéropoly complexe d'un élément de métal de transition étant présent en quantité suffisante pour fournir un effet d'inhibition de la corrosion.

38. Le procédé de la revendication 37, dans lequel ladite solution comprend en outre au moins un additif additionnel comprenant un composé choisi dans le groupe constitué des composés de métaux de transition, des composés des éléments métalliques des groupes IIIa à VIa du tableau périodique des éléments et des mélanges de ceux-ci, ledit au moins un additif additionnel étant présent en quantité suffisante pour fournir un effet d'inhibition de la corrosion.

39. Le procédé de la revendication 37, dans lequel, pendant ladite étape de circulation, ledit au moins un anion hétéropoly complexe forme une couche protectrice sur une surface à l'intérieur de ladite machine.

40. Le procédé de la revendication 37, dans lequel, pendant ladite étape de circulation, ladite solution est exposée à des températures allant d'environ 150°F à environ 550°F.

41. Le procédé de la revendication 37, dans lequel ladite solution absorbante comprend en outre du nitrate de lithium et un halogénure de zinc.

42. Le procédé de la revendication 37, dans lequel l'ammoniaque est présente en quantité d'environ 1 à environ 50 pour cent en poids sur la base du poids total de la solution.
